# EUROPEAN PATENT APPLICATION

(11) **EP 3 678 303 A1**
(43) Date of publication of application: **08.07.2020**
(21) Application number: 19215283.3
(22) Date of filing: 11.12.2019
(51) Int. Cl.: H04B 10/291, H04B 10/297, H04J 14/06

(54) **TRANSMISSION METHOD AND SYSTEM FOR IMPROVED UNIDIRECTIONAL OR BIDIRECTIONAL DATA TRANSMISSION OVER TELECOMMUNICATION NETWORK, POLARIZATION ATTRACTOR CIRCUIT, COMPUTER PROGRAM AND COMPUTER PROGRAM PRODUCT**

(30) Priority: 20.12.2018 PL 42829218
(71) Applicant: Dawis IT Sp. z o. o., 05-800 Pruszkow (PL)
(72) Inventor: CYBULSKI, Robert, 05-800 Pruszkow (PL)
(74) Representative: Wlasienko, Jozef

(57) **Abstract**

The subject matter of the invention relates to a transmission method and system (100; 200) for improved unidirectional or bidirectional data transmission over a telecommunication network, a polarization attractor circuit (A1, A2; B1, B2), a computer program and a computer program product therefore.

A transmission system (100; 200) with unidirectional or bidirectional data transmission with the use of a suitably designed polarization attractor circuit (A1) and (A2) or polarization attractor circuit (B1) and (B2) according to the invention. Said transmission system (100; 200) is constructed of a first at least one polarization attractor circuit (A1; B1) located between an end device (EDA1_1, EDA1_2, ..., EDA1_N) or (EDB1_1, EDB1_2, ..., EDB1_N) and a transmission medium (110; 210) and a second at least one polarization attractor circuit (A2; B2) located between the transmission medium (110; 210) and an end device (EDA2_1, EDA2_2, ..., EDA2_N) or (EDB2_1, EDB2_2, ..., EDB2_N).

## Description

### Field of the Invention

The subject matter of the invention relates to a transmission method and system for improved unidirectional or bidirectional data transmission over a telecommunication network, a polarization attractor circuit, a computer program and a computer program product therefore.

The present invention concerns in general the field of telecommunications, including a network infrastructure that combines elements of optoelectronics, informatics and electronics. The present invention concerns a realization of polarization multiplexing with the use of a designed polarization attractor circuit and amplification of transmitted signals by non-linear action based on Stimulated Raman Scattering in order to enable a telecommunication operator to increase the transmission capability of a telecommunication link without interfering in already existing structure of a telecommunication system, in particular in the case of telecommunication links with respect to which there are plans for restructuring or increasing transmission capability.

### Background of the Invention

Growing demand for high-speed of data transmission, minimization of delays and the number of connected users require for telecommunication operators to enhance the existing telecommunication network technologies, including telecommunication links, or to design and construct new telecommunication connections.

Due to lower investment costs, there is a tendency to increase the transmission capability of already existing telecommunication links, which requires the use of often expensive and highly sophisticated data transmission devices that use light as a data carrier or systems that optimize the organization of data transmission over a transmission medium, which is usually a transmission optical fibre.

The purpose of the present invention is therefore to develop a completely new solution according to the invention that consists in increasing the transmission capabilities of already existing telecommunication links and thus to solve the above mentioned limitations existing in the prior art.

### Description of the Prior Art

In light of the above described problem, the development of technologies in the field of optoelectronics provides more and more options in this respect by introducing subsequent degrees of transmission congestion in a transmission medium, which is usually a transmission optical fibre.

There are known transmission methods for data transmission with the use of transmission optical fibres in systems having various types of network infrastructure. Presently, the use of a dedicated optical fibre connection for a single user is an impractical solution for more sophisticated telecommunication networks due to a huge number of users and their demand for high-speed data transmission.

There are known prior-art telecommunication links which use various methods of data multiplexing based on various data carrier properties. In the case of optical transmission systems, methods based on Wavelength Division Multiplexing (WDM) are frequently applied in which independent data transmissions, sent in the same or in the opposite direction, obtain different central wavelengths. The number of acceptable wavelengths, for determining interest and in terms of physical capabilities, is defined by the International Telecommunication Union (ITU). Thanks to fact that such specification is generally available, end devices do not have to originate from one source but they only have to comply with a criterion related to the transmission channel parameters. Compliance with the requirements concerning transmission channel bandwidth, i.e. part of frequency spectrum, reserved for given central frequency, prevents the operator of a telecommunications apparatus from interference between various channels of WDM system. Despite the fact that subsequent solutions have been implemented with the aim to facilitate operation with the available entire frequency spectrum, such as flexible channel bandwidth, the maximum number of channels used cannot be increased over a certain limit, which demonstrates that the possibilities of developing such a system are limited.

There are also known methods based on Time Division Multiplexing (TDM) in which independent transmissions are sent via a shared transmission medium, which is usually a transmission optical fibre, in different times. In the case of properly synchronized end devices data transmissions sent thereby will not interfere with one another.

There is also known in the prior art a telecommunication network architecture whose popularity has been growing recently and which combines the functionality of the above-mentioned method based on Wavelength Division Multiplexing (WDM) and the method based on Time Division Multiplexing (TDM), i.e. a passive access network architecture which complies with group G.984 of ITU standards. In this case data from a telecommunication network are transmitted to users at a different wavelength than data from users to a WDM telecommunications network; moreover, data sent to a telecommunication network by users are transmitted in strictly determined times of TDM system.

However, such network architectures require a very precise synchronization of end devices by the telecommunication operator, and limit the possibilities of constructing or developing a telecommunications network, so as not to cause excessive time differences in data transmissions to different users, which would make it difficult to synchronize end devices with switchboard devices.

There are also known solutions in which individual users of a telecommunications network are identified by individual pseudo-random sequences by which they multiply data prepared for data transmission. Information for a specific user prepared in such a way and transmitted via a transmission medium in the form of an transmission optical fibre may be separated from the data for other users at a receiving side if an individual sender's pseudo-random sequence is known. This type of multiplexing is known as the Code Division Multiplexing (CDM) method. However, such an approach involves the necessity of generating pseudo-random sequences having appropriate features, individually for each user.

Methods based on Polarization Division Multiplexing (PDM) are also becoming increasingly popular. In this approach, independent users transmit their data using signals having the same wavelengths but different polarities. According to currently applied concept of this solution the proper receipt of data transmitted in this way requires advanced electronic calculation procedures with the use of signal processors at a receiving side. This approach thus requires optical-electrical conversion and advanced data processing, which increases complexity of a transmission system and thus raises the costs.

The above prior-art solutions, as compared with the claimed solution according to the invention, use different technical means in order to realize the intended purposes of the present invention.

### Summary of the Invention

The purpose of the present invention is to develop a new solution in the form of a transmission method and system with the use of designed polarization attractor circuits for improved unidirectional or bidirectional data transmission over a telecommunication network, including a computer program and a computer program product therefore enabling a telecommunication operator to increase transmission capability of a telecommunication link without interfering in the already existing structure of a transmission system, in particular in the case of telecommunication links with respect to which there are plans for restructuring or increasing transmission capability.

In other words, the solution according to the invention is to lead to an increase in transmission capabilities of already existing telecommunication links which means, among others, at least doubling the volume of traffic supported by a transmission link in a telecommunications network.

To achieve the above purposes, in accordance with one aspect of the present invention, the present invention provides a polarization attractor circuit A1; A2; B2 designed for an improved bidirectional data transmission over a telecommunications network, characterized in that it comprises: a first, second; fifth, sixth polarization controllers, respectively, designed for changing the polarization state of signals, wherein said first, second; fifth, sixth polarization controllers are connected to at least one first; fourth polarizing beam splitter, respectively, wherein at least one first; fourth polarizing beam splitter is designed for combining signals into a common output of the first; fourth polarizing beam splitter on the one side in one data transmission direction and for splitting signals into separate outputs from said first; fourth polarizing beam splitter and on the other side in the opposite data transmission direction, wherein said at least one first; fourth polarizing beam splitter is connected to a first; third switching element, respectively, which in turn is connected to second; fourth switching element, respectively, and to a third; seventh polarization controller, respectively, wherein the third; seventh polarization controller is connected to a first; second attenuator, respectively, and said first; second attenuator is connected to a first; third splitting element, respectively, which in turn is connected to a first; second nonlinear element, respectively, through which first; second nonlinear element is connected to a second; fourth coupling element, respectively, wherein said second; fourth coupling element is subsequently connected to the second; fourth switching element, respectively, and to the fourth; eighth polarization controller, respectively, through which the fourth; eighth polarization controller is connected to a second; third polarizing beam splitter, respectively, which in turn is connected to a first; second pump laser, respectively.

Preferably, said first; fifth polarization controller is a horizontal polarization controller and said second; sixth polarization controller is a vertical polarization controller.

Preferably, said third; seventh polarization controller is a linear polarization controller with the inclination angle of 45° relative to the axis of operation of the first; fourth polarizing beam splitter.

Preferably, said first, second; third, fourth switching elements are optical or optoelectronic.

Preferably, said first; second non-linear element consists of at least several sections of the same or different length which falls within the range from 0.1 km to 50 km and of the same or different nonlinearity levels which fall within the range from 0.5x1/W·km to 11x1/W·km.

Preferably, it comprises at least one first; second programmable managing element connected to said first; second attenuator, respectively, and/or to said fourth; eighth polarization controller, respectively, and/or to said first; second pump laser, respectively.

Preferably, at least one said first; second programmable managing element has at least one measurement sensor incorporated in its structure and designed for monitoring at least one environmental parameter.

Preferably, said first; second attenuator is optical or optoelectronic.

Preferably, said first; second pump laser constitutes sets of lasers with adjusted spectral parameters.

Preferably, said fourth; eighth polarization controller is a horizontal polarisation controller.

According to another aspect of the present invention, the present invention provides a polarization attractor circuit B1 designed for an improved unidirectional data transmission over a telecommunications network, characterized in that it comprises first, second polarization controllers designed for changing the polarization state of signals, wherein said first, second polarization controllers are connected to at least one first polarizing beam splitter designed to combine signals into a common output of the first polarizing beam splitter in one data transmission direction.

Preferably, first polarisation controller is a horizontal polarisation controller and second polarisation controller is a vertical polarisation controller.

According to yet another aspect of the present invention, the present invention provides a transmission system for an improved unidirectional or bidirectional data transmission over a telecommunication network in which end devices on the side of the polarization attractor circuit A1 or on the side of the polarization attractor circuit B1 and end devices on the side of the polarization attractor circuit A2 or on the side of the polarization attractor circuit B2 constitute part of the structure of transmission devices for data transmission using methods based on wave division multiplexing (WDM) and/or methods based on Time Division Multiplexing (TDM) or methods based on code division multiplexing (CDM), wherein end devices on the side of the polarization attractor circuit A1 or on the side of the polarization attractor circuit B1 are connected through a transmission medium with end devices on the side of the polarization attractor circuit A2 or on the side of the polarization attractor circuit B2, wherein the transmission medium is located in cable ducting, overhead or inside buildings, characterized in that between the end devices on the side of the polarization attractor circuit A1 or on the side of the polarization attractor circuit B1 and the transmission medium, there is located a first at least one polarization attractor circuit A1; B1 as defined in any aspect of the invention for the polarization attractor circuit A1 and as defined in any aspect of the invention for the polarization attractor circuit B1, and between the transmission medium and the end devices on the side of the polarization attractor circuit A2 or on the side of the polarization attractor circuit B2 there is located a second at least one polarization attractor circuit A2; B2 as defined in any aspect of the invention for the polarization attractor circuit A2; B2.

Preferably, the transmission medium is a transmission optical fibre.

Preferably, a transmission optical fibre used as the transmission medium has the same nonlinearity level as the first; second non-linear element.

According to yet another aspect of the present invention, the present invention provides a transmission method for an improved unidirectional or bidirectional data transmission over a telecommunication network consisting in that the end devices on the side of the polarization attractor circuit A1 or on the side of the polarization attractor circuit B1 and end devices on the side of the polarization attractor circuit A2 or on the side of the polarization attractor circuit B2 constitute part of the structure of transmission devices for data transmission using methods based on Wavelength Division Multiplexing (WDM) and/or methods based on Time Division Multiplexing (TDM) or methods based on Code Division Multiplexing (CDM), wherein the end devices on the side of the polarization attractor circuit A1 or on the side of the polarization attractor circuit B1 send signals having a predetermined wavelength via a transmission medium to the end devices on the side of the polarization attractor circuit A2 or on the side of the polarization attractor circuit B2, wherein the transmission medium is located in cable ducting, overhead or inside buildings, characterized in that signals having predetermined wavelengths are delivered from the end devices on the side of the polarization attractor circuit A1 or on the side of the polarization attractor circuit B1 to a first at least one polarization attractor circuit A1; B1 as defined in any aspect of the invention for the polarization attractor circuit A1 or as defined in any aspect of the invention for the polarization attractor circuit B1, and then the signals are delivered via the transmission medium to the second at least one polarization attractor circuit A2; B2 as defined in any aspect of the invention for the polarization attractor circuit A2; B2 and from there - to the end devices on the side of the polarization attractor circuit A2 or on the side of the polarization attractor circuit B2.

Preferably, for the polarization attractor circuit A1; B1, signals with predetermined wavelengths are delivered to the inputs of first and second polarization controller, wherein the signals with predetermined wavelengths received in the first and second polarization controller are subjected to a change of polarization state by performing horizontal polarization in the first polarization controller, and by performing vertical polarization in the second polarization controller, to the above-mentioned signals with predetermined wavelengths are given orthogonal polarization states;
subsequently, the signals with predetermined wavelengths subjected to a change of polarization state are delivered from the outputs of the first and second polarization controllers to separate inputs of at least one first polarizing beam splitter in which said signals are combined in such a way that multiplied-polarization signals with predetermined wavelengths are obtained at the common output of at least one first polarizing beam splitter;
in the case of the polarization attractor circuit A1, such multiplied-polarization signals with predetermined wavelengths are delivered to the input of the first switching element which directs these signals to the input of the second switching element by means of which the signals are placed in the transmission medium;
wherein in the case of the polarization attractor circuit B1, such polarization-multiplied signals with predetermined wavelengths are placed immediately in the transmission medium;
these polarization-multiplied signals with predetermined wavelengths are sent by means of the transmission medium to the input of the fourth switching element located in the second polarization attractor circuit A2; B2;
subsequently, the signals are delivered by means of said fourth switching element to the input of the fourth coupling element in which these multiplied signals with predetermined wavelengths are combined with the signal of a pump wave with a predetermined wavelength originating from a second pump laser;
wherein said signal of a pump wave with a predetermined wavelength from the second pump laser, before it reaches said fourth coupling element, is delivered from the second pump laser to the input of the third polarizing beam splitter;
subsequently, the signal of a pump wave with a predetermined wavelength from the second pump laser is delivered from the output of the third polarizing beam splitter to the input of eighth polarization controller in which said signal of a pump wave with a predetermined wavelength from the second pump laser is subjected to a change of polarization state into a horizontal polarization state of the signal of the pump wave with the predetermined wavelength;
subsequently, the signal of a pump wave with a predetermined wavelength from the second pump laser is delivered from the output of eighth polarization controller to the input of said fourth coupling element in which the above-mentioned combining of signals takes place and the signals are delivered to the input of the second non-linear element;
wherein in the second non-linear element, interaction based on stimulated Raman scattering occurs between the signal of a pump wave with a predetermined wavelength from the second pump laser, and by means of multiplied signals with predetermined wavelengths, result in a change of the polarization state, degree of polarization and signal strength;
subsequently, the multiplied signals with predetermined wavelengths and the signal of a pump wave with a predetermined wavelength from the second pump laser are delivered from the output of the second non-linear element to the input of the third splitting element;
wherein the signal of a pump wave with a predetermined wavelength from the second pump laser is separated by means of third splitting element from the multiplied signals with predetermined wavelengths by means of a band-pass filter;
then the multiplied signals with predetermined wavelengths are delivered to the input of the second attenuator which adjusts the signal strength by attenuating to a specific predetermined level;
subsequently, the multiplied signals with predetermined wavelengths are delivered from the output of second attenuator to the input of seventh polarization controller by means of which their polarization state changes and the above-mentioned signals are thus given orthogonal polarization states by performing linear polarization with the inclination angle of 45° relative to the axis of operation of fourth polarizing beam splitter;
subsequently, the signals with predetermined wavelengths subjected to change of polarization state are delivered to the input of the third switching element by means of which the signals are delivered to the common input of the fourth polarization beam splitter in which the signals with predetermined wavelengths are split and delivered to the separate outlets of said fourth polarization beam splitter;
wherein separated signals with predetermined wavelengths are delivered from said outputs of fourth polarizing beam splitter to the input of fifth and sixth polarization controller, and subsequently to respective outputs of the polarization attractor circuit A2; B2 and from there - to the end devices on the side of the polarization attractor circuit A2 or on the side of the polarization attractor circuit B2,
whereas signals with predetermined wavelengths in the opposite data transmission direction are delivered from the end devices on the side of the polarization attractor circuit A2 to the input of fifth and sixth polarization controllers and located in the polarization attractor circuit A2, said signals with predetermined wavelengths being subjected to analogous operations during their way through the above-described connections in the opposite data transmission direction as those for the signals with predetermined wavelengths which are delivered from the end devices on the side of the polarization attractor circuit A1.

Preferably, the polarization state of signals with predetermined wavelengths is changed manually or automatically by means of first, second; fifth, sixth polarization controller.

Preferably, signals with predetermined wavelength fall within the range of 1500 nm to 1570 nm in one data transmission direction and within the range of 1470 nm to 1500 nm in the opposite data transmission direction.

Preferably, a signal with predetermined wavelength from a first; second pump laser falls within the range of 1400 to 1460 nm.

Preferably, said first; second attenuator and/or said fourth; eighth polarization controller and/or said first; second pump laser are electronically or mechanically controlled by means of at least one first; second programmable managing element.

Preferably, at least one first; second programmable managing element additionally monitors at least one environmental parameter by means of at least one measurement sensor incorporated in its structure.

Preferably, mechanical tension of the polarization attractor circuit A1; A2; B2 structure and/or atmospheric pressure and/or temperature level and/or humidity level and/or levelling of the polarization attractor circuit A1; A2; B2 are monitored by means of at least one measurement sensor.

According to yet another aspect of the present invention, the present invention provides a computer program by means of which it is possible to remotely control and monitor the operation of the polarization attractor circuits A1; A2; B2 in accordance with the proposed method, wherein all steps of the method may be performed according to one of the above items when the computer program is executed in at least one first; second programmable managing element and/or in a remotely localized computer and/or server platform.

According to yet another aspect of the present invention, the present invention provides a computer program product with a computer-readable medium and a computer program saved on a computer-readable medium and a program code, which enables performing the steps of the method according to one of the above items when the computer program is executed in at least one first; second programmable managing element and/or in a remotely localized computer and/or sever platform.

The solution provided according the aspects proposed above ensures a suitable method and system using the designed polarization attractor circuits, including a computer program and a computer program product for improved unidirectional or bidirectional data transmission over a telecommunication network, applicable in particular in transmission systems in order to obtain polarization multiplexing with the use of the designed polarization attractor circuit and to amplify transmitted signals by non-linear action based on Stimulated Raman Scattering in a transmission medium, usually in the form of a transmission optical fibre, which contributes to at least doubling the volume of traffic supported by a transmission link.

One unquestionable advantage of the solution according to the invention is the fact that is does not interfere in the existing structure of a transmission system at higher layers of OSI model than the Data Link layer. Consequently, such a method and system contributes to optimizing the costs of extending a telecommunication network on the one hand, and at the same time increases efficiency of a telecommunication network on the other hand by multiplexing and amplifying transmitted signals.

Moreover, the solution according to the invention is more universal compared to the known prior art solutions; namely, it makes it easier to extend a telecommunication network and increases its transmission potential by introducing another stage of data transmission multiplexing, and at the same time it reduces the need to carry out costly design works when reconstructing a telecommunications network.

Moreover, the proposed solution according to the invention does not cause data transmission delays due to the absence of optical-electrical conversion.

### Brief Description of the Drawings

The subject matter of the invention is shown in the exemplary embodiment, with reference to the attached drawings, wherein:
- **FIG.1**: is a block diagram concerning the transmission method and system with bidirectional data transmission in one embodiment using the designed polarization attractor circuits according to the invention;
- **FIG. 2**: is a block diagram concerning the transmission method and system with unidirectional data transmission in another embodiment using the designed polarization attractor circuits according to the invention.

### Detailed Description of the Invention

The subject matter of the invention is described in detail below with reference to the attached Figures and exemplary embodiments. The present invention is not limited only to the detailed embodiments described herein.

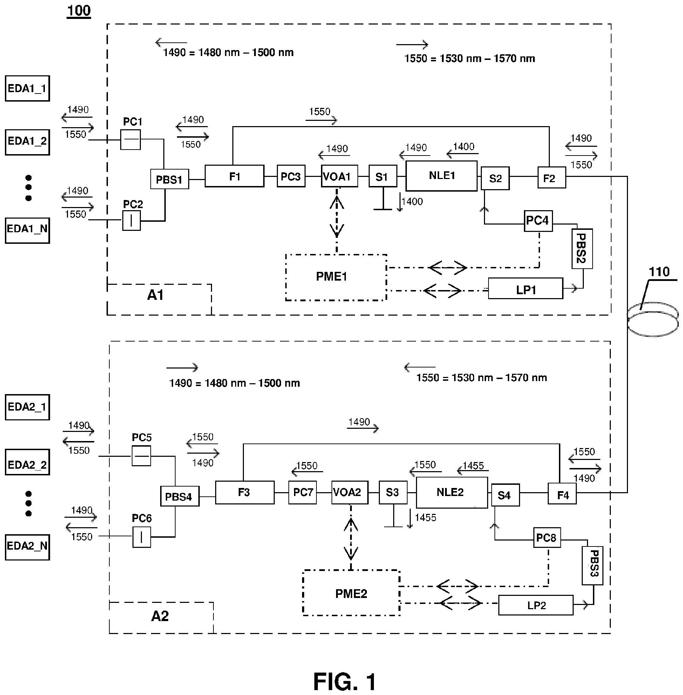

The exemplary embodiment presented in **FIG 1**. illustrates a transmission system 100 with bidirectional data transmission with the use of the designed polarization attractor circuit A1 and A2 according to the invention. Said transmission system 100 is constructed of a first polarization attractor circuit A1 located between an end device EDA1_1, EDA1_2 and a transmission medium 110, and a second polarization attractor circuit A2 located between the transmission medium 110 and an end device EDA2_1, EDA2_2. Both polarization attractor circuit A1 and A2 are designed for increasing data transmission speed.

In the presented embodiment, data transmission speed is doubled from 1 GB/s to about 2 GB/s in two directions using different wavelengths - in one direction in the range of 1480 nm to 1500 nm and in the other direction in the range of 1530 nm to 1570 nm by the transmission medium 110 which, in this exemplary embodiment, is in the form of a transmission optical fibre.

In the presented embodiment each polarization attraction circuit A1 and A2 comprises polarization controllers PC1, PC2; PC5, PC6 for the polarization attraction circuit A1 and A2, respectively, which are designed for changing the polarization state of signals; the polarization controller PC1; PC5 in the polarization attractor circuit A1 and A2, respectively, is a horizontal polarization controller whereas the polarization controller PC2; PC6 in the polarization attractor circuit A1 and A2, respectively, is a vertical polarization controller. Said polarization controllers PC1, PC2; PC5, PC6 are connected to a polarization beam splitter PBS1; PBS4 in the polarization attractor circuit A1 and A2, respectively; the polarization beam splitter PBS1; PBS4 is designed for combining signals into a common output of the polarization beam splitter PBS1; PBS4 on one side in one data transmission direction and for splitting signals into separate outputs from said polarization beam splitter PBS1; PBS4 on the other side in the opposite data transmission direction. Said polarization beam splitter PBS1; PBS4 is connected to a switching element F1; F3 in the polarization attractor circuit A1; A2, respectively, which is in turn connected to a switching element F2; F4 in the polarization attractor circuit A1; A2, respectively, and to a polarization controller PC3; PC7 in the polarization attractor circuit A1; A2, respectively, designed to change the polarization state of signals; the polarization controller PC3; PC7 in the polarization attractor circuit A1; A2, respectively, is a controller of 45° slant linear polarization relative to the axis of operation of the polarization beam splitter PBS1; PBS4. Said polarization controller PC3; PC7 is subsequently connected to an optical attenuator VOA1; VOA2 in the polarization attractor circuit A1; A2, respectively. The optical attenuator VOA1; VOA2 is designed for adjusting the level of signal strength at the input of the polarization controller PC3; PC7. Said optical attenuator VOA1; VOA2 is connected to a splitting element S1, S3 in the polarization attractor circuit A1 and A2, respectively, which is in turn connected to a nonlinear element NLE1; NLE2 in the polarization attractor circuit A1 and A2, respectively. In the present exemplary embodiment, said nonlinear element NLE1; NLE2 consists of 2 sections having the same length of 2 km and nonlinearity level of 5x1/W·km and, in the present embodiment, it has a higher nonlinearity level than the transmission medium 110. In an optimal solution, the transmission medium 110 has the same nonlinearity level as the nonlinear element NLE1; NLE2. A splitting element S1; S3 is connected via said nonlinear element NLE1; NLE2 with a coupling element S2; S4 in the polarization attractor circuit A1; A2, respectively. Said coupling element S2; S4 makes it possible to aggregate signals into one fibre of said nonlinear element NLE1; NLE2. The coupling element S2; S4 is subsequently connected to the switching element F2; F4 and to the polarization controller PC4; PC8 in the polarization attractor circuit A1 and A2, respectively, designed for changing the polarization state of signals; the polarization controller PC4; PC8 in the polarization attractor circuit A1; A2, respectively, is a horizontal polarization controller. The said polarization controller PC4; PC8 is connected to the polarization beam splitter PBS2; PBS3 in the polarization attractor circuit A1; A2, respectively, which is in turn connected to a pump laser LP1; LP2 in the polarization attractor circuit A1; A2, respectively. Said optical attenuator VOA1; VOA2, polarization controller PC4; PC8 and pump laser LP1; LP2 are connected to a programmable managing element PME1; PME2 for the polarization attractor system A1; A2, respectively; said programmable managing element PME1; PME2 being additionally provided with five measurement sensors incorporated in its structure and designed for monitoring environmental parameters, such as mechanical tension of the structure of the polarization attractor circuit A1; A2, atmospheric pressure, temperature level, humidity level and levelling of the polarization attractor circuit A1; A2.

On the basis of the above described polarization attractor circuit A1 and A2, an exemplary embodiment of the method for bidirectional data transmission according to the invention will now be presented, which method is carried out as follows:
Signals having wavelengths of 1550 nm sent in one data transmission direction in the present embodiment are delivered from end devices EDA1_1, EDA2_2 constituting part of the structure of transmission devices to the input of the polarization controller PC1 and PC2 located in the first polarization attractor circuit A1. Signals having wavelengths of 1550 nm supplied to said polarization controller PC1 and PC2 are subjected to a change of polarization state and thus the above mentioned signals are given orthogonal polarization states by performing horizontal polarization in the polarization controller PC1 and by performing vertical polarization in the polarization controller PC2. Signals with wavelengths of 1550 nm subjected to a change of polarization state are subsequently delivered from the output of polarization the controller PC1 and PC2 to separate inputs of the polarization beam splitter PBS1 in which the signals are combined in such a way that polarization-multiplexed signals having a wavelength of 1550 nm are obtained at the common output of the polarization beam splitter PBS1. Such combined signals get to the input of the switching element F1 which directs these signals to the input of the switching element F2 which in turn places the signals in the transmission medium 110. In this embodiment, the transmission medium 110 is a transmission optical fibre via which the polarization-multiplexed signals having wavelengths of 1550 nm are sent to the input of the switching element F4 located in the second polarization attractor circuit A2. Subsequently, said switching element F4 delivers the signals to the input of the coupling element S4 which combines the multiplexed signals having wavelengths of 1550 nm with a pump wave signal which, in the embodiment, has a wavelength of 1455 nm and originates from the pump laser LP2. Said pump wave signal having the wavelength of 1455 nm from the pump laser LP2, before it reaches said coupling element S4, is supplied from the pump laser LP2 to the input of the polarization beam splitter PBS3. Subsequently, the pump wave signal having the wavelength of 1455 nm from the pump laser LP2 is delivered from the output of the polarization beam splitter PBS3 to the input of the polarization controller PC8 in which said pump wave signal having the wavelength of 1455 nm from the pump laser LP2 is subjected to a change of polarization state and said pump wave signal having the wavelength of 1455 nm is given horizontal polarization state in the present embodiment. Subsequently, the pump wave signal having the wavelength of 1455 nm from the pump laser LP2 is delivered from the output of the polarization controller PC8 to the input of said coupling element S4 in which the above mentioned combination of signals takes place and the signals are delivered to the input of the nonlinear element NL2. In the nonlinear element NL2 interaction based on Stimulated Raman Scattering occurs between the pump wave signal having the wavelength of 1455 nm from the pump laser LP2 and the multiplexed signals having wavelengths of 1550 nm. Stimulated Raman Scattering consists basically in scattering the pump wave power on the structural molecules of the nonlinear element's material as a result of which the pump wave transfers part of its energy to the material as vibration of its molecules. Due to vibration of the molecules of medium the remaining power of the pump wave signal is emitted within the band of signals having the wavelength of 1550 nm in one data transmission direction or signals having the wavelength of 1490 nm in the other, opposite data transmission direction for the pump wave signal having the wavelength of 1455 nm from the pump laser LP2 and the pump wave signal having the wavelength of 1400 nm from the pump laser LP1, respectively. This results in a change of polarization state, degree of polarization and level of signal power. Subsequently, the multiplexed signals having the wavelengths of 1550 nm and the pump wave signal having the wavelength of 1455 nm from the pump laser LP2 are delivered from the output of the nonlinear element NLE2 to the input of the splitting element S3. The splitting element S3 separates the pump wave signal having the wavelength of 1455 nm from the pump laser LP2 from the multiplexed signals having the wavelength of 1550 nm by means of a bandpass filter. Next, the multiplexed signals having the wavelength of 1550 nm are delivered to the input of the optical attenuator VOA2 which adjusts the signal power by attenuating it to a specific predetermined level, most frequently to the level of 3dBm, i.e. 2 mW, which is equivalent to the double signal level typically used in optical telecommunication. However, this is each time dependent on such factors as for example cable layout, the level of signals having specific wavelengths, etc. Subsequently, the multiplied signals having the wavelength of 1550 nm are delivered from the output of the optical attenuator VOA2 to the input of the polarization controller PC7 which changes their state of polarization and thus the signals are given orthogonal polarization states by performing slant linear polarization at 45° relative to the axis of operation of the polarization beam splitter PBS4, and subsequently the signals having the wavelength of 1550 nm subjected to a change of polarization state are delivered to the input of the switching element F3 which delivers the signals to the common input of the polarization beam splitter PBS4 which splits the signals having the wavelength of 1550 nm and delivers them to the separate outputs of said polarization beam splitter PBS4. From said outputs of the polarization beam splitter PBS4, the split signals having the wavelength of 1550 nm get to input of the polarization controller PC5 and PC6 and subsequently to the respective outputs of the polarization attractor circuit A2 and from there to the end devices EDA2_1, EDA2_2.

In turn, signals having the wavelength of 1490 nm are sent in the opposite data transmission direction and in the present example embodiment they are delivered from the end devices EDA2_1, EDA2_2 constituting part of the structure of transmission devices to the inputs of the polarization controllers PC5 and PC6 located in the polarization attractor circuit A2. Said signals having the wavelengths of 1490 nm are subjected to analogous operations, when travelling along the above described route of connections in the opposite data transmission direction, as the signals having the wavelength of 1550 nm which are delivered from the end devices EDA1_1, EDA1_2.

In the above embodiment of the method for bidirectional data transmission according to the invention said optical attenuator VOA1; VOA2, polarization controller PC4; PC8 and pump laser LP1; PL2 in the polarization attractor circuit A1 and A2, respectively, are electronically controlled by means of a programmable managing element PME1; PME2 in the polarization attractor circuit A1 and A2, respectively. Additionally, the programmable managing element PME1; PME2, respectively, in polarization attractor circuit A1 and A2, also monitors, by means of five measurement sensors incorporated in its structure, environmental parameters such as mechanical tension of the structure of the polarization attractor circuit A1; A2, atmospheric pressure, temperature level, humidity level and levelling of the polarization attractor circuit A1; A2.

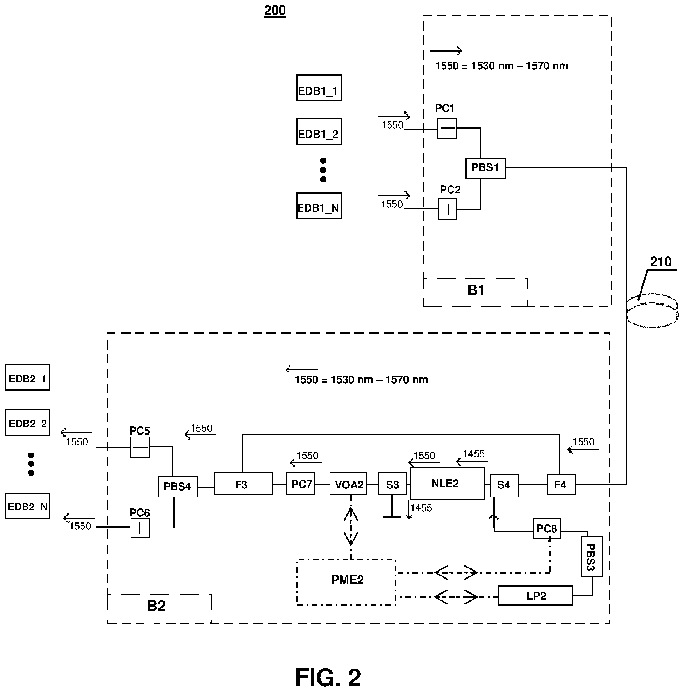

The next exemplary embodiment presented in **FIG. 2** illustrates a transmission system 200 with unidirectional data transmission with the use of the designed polarization attractor system B1 and B2 according to the invention. Said transmission system 200, just like the transmission system 100 illustrated in **FIG. 1****,** is constructed of a first polarization attractor circuit B1 located between an end device EDB1_1, EDB1_2 and a transmission medium 210, and a second polarization attractor circuit B2 located between the transmission medium 210 and an end device EDB2_1, EDB2_2. In this case data transmission is unidirectional only since the polarization attractor circuit B1 is modified compared to the polarization attractor circuit A1 in **FIG. 1****.** The polarization attractor circuit B 1 is simplified in this embodiment to connections between polarization controllers PC1, PC2 and a polarization beam splitter PBS1. The functionality of the polarization attractor circuit B2 in terms of how it affects signals having wavelengths of 1550 nm remains unchanged compared to the embodiment presented in **FIG. 1**.

In the above exemplary embodiment data transmission speed is also doubled from 1 GB/s to about 2 GB/s but in one direction only and using the wavelength range of 1530 nm to 1570 nm via a transmission medium 210 which in this embodiment is also in the form of a transmission optical fibre.

In summary, in this embodiment the method provided in this case for unidirectional data transmission according to the invention is carried out as follows:
Signals having a wavelength of 1550 nm transmitted in one data transmission direction in this embodiment are delivered from end devices EDB1_1, EDB1_2 constituting part of the structure of transmission devices to the inputs of polarization controllers PC1 and PC2 located in the first polarization attractor circuit B1. The signals having a wavelength of 1550 nm delivered to said polarization controllers PC1 and PC2 are subjected to a change of polarization state in an analogical way as in the case of polarization controllers PC1 and PC2 in the polarization attractor circuit A1 in **FIG1** and thus the above mentioned signals are given orthogonal polarization states by performing horizontal polarization in the polarization controller PC1 and by performing vertical polarization in the polarization controller PC2. The signals having the wavelengths of 1550 nm and subjected to the change of polarization state are subsequently delivered from the outputs of polarization controllers PC1 and PC2 to the separate outputs of the polarization beam splitter PBS1 in which the signals are combined in such a way that polarization-multiplexed signals having the wavelengths of 1550 nm are obtained at the common output of the polarization beam splitter PBS1. Such combined signals get to the transmission medium 210 which, in this embodiment, is a transmission optical fibre via which the polarization-multiplexed signals having the wavelength of 1550 nm are sent to the input of a switching element F4 located in the second polarization circuit B2. In the polarization attractor circuit B2 the multiplexed signals having a wavelength of 1550 nm are subjected to the same operations as in the case of polarization attractor circuit A1 in **FIG. 1** and the signals get to the respective outputs of the polarization attractor circuit B2 and from there to the end devices EDB2_1, EDB2_2.

The above description of presented exemplary embodiments has been provided to enable any person skilled in the art to carry out or use the present invention. It is also possible to modify these exemplary embodiments in various ways to include all such changes, modifications and variants that fall within the essence and scope of the attached patent claims. The basic principles defined herein may thus be applied in other embodiments not extending the scope of the invention. Therefore, the intention of the present invention is not to limit it to the exemplary embodiments presented herein but to make is consistent with the broadest possible scope corresponding to the principles and new features presented herein.

Thus, the present solution according to the invention uses the above specified technical means as indicated in FIG. 1 and FIG 2 to offer a transmission method and system which use of the designed polarization attractor circuits and which are designed to increase the speed of data transmission via a transmission medium.

The invention is capable of being used in particular in all applications where there is a need for increasing transmission capability without interfering in the existing structures of a transmission system, in particular in server rooms. This does not exclude however the possibility of applying the solution according to the invention in other places where an increase in data transmission speed is required.

## Claims

1. A polarization attractor circuit (A1; A2; B2) designed for an improved bidirectional data transmission over a telecommunications network, **characterized in that** it comprises: polarization controllers (PC1, PC2; PC5, PC6), respectively, designed for changing the polarization state of signals, wherein said polarization controllers (PC1, PC2; PC5, PC6) are connected to at least one polarizing beam splitter (PBS1; PBS4), respectively, wherein at least one polarizing beam splitter (PBS1; PBS4) is designed for combining signals into a common output of the polarizing beam splitter (PBS1; PBS4) on the one side in one data transmission direction and for splitting signals into separate outputs from said polarizing beam splitter (PBS1; PBS4) and on the other side in the opposite data transmission direction, wherein said at least one polarizing beam splitter (PBS1; PBS4) is connected to a switching element (F1; F3), respectively, which in turn is connected to switching element (F2; F4), respectively, and to a polarization controller (PC3; PC7), respectively, wherein the polarization controller (PC3; PC7) is connected to an attenuator (VOA1; VOA2), respectively, and said attenuator (VOA1; VOA2) is connected to a splitting element (S1; S3), respectively, which in turn is connected to a nonlinear element (NLE1; NLE2), respectively, through which nonlinear element (NLE1; NLE2) is connected to a coupling element (S2; S4), respectively, wherein said coupling element (S2; S4) is subsequently connected to the switching element (F2; F4), respectively, and to the polarization controller (PC4; PC8), respectively, through which polarization controller (PC4; PC8) is connected to a polarizing beam splitter (PBS2; PBS3), respectively, which in turn is connected to a pump laser (LP1; LP2), respectively.

2. The circuit (A1; A2; B2) according to claim 1, **characterized in that** said polarization controller (PC1; PC5) is a horizontal polarization controller and said polarization controller (PC2; PC6) is a vertical polarization controller.

3. The circuit (A1; A2; B2) according to claim 1, **characterized in that** said polarization controller (PC3; PC7) is a linear polarization controller with the inclination angle of 45° relative to the axis of operation of the polarizing beam splitter (PBS1; PBS4).

4. The circuit (A1; A2; B2) according to claim 1, **characterized in that** said switching elements (F1, F2; F3, F4) are optical or optoelectronic.

5. The circuit (A1; A2; B2) according to claim 1, **characterized in that** said non-linear element (NLE1; NLE2) consists of at least several sections of the same or different length which falls within the range from 0.1 km to 50 km and of the same or different nonlinearity levels which fall within the range from 0.5x1/W·km to 11x1/W·km.

6. The circuit (A1; A2; B2) according to claim 1, **characterized in that** it comprises at least one programmable managing element (PME1; PME2) connected to said attenuator (VOA1; VOA2), respectively, and/or to said polarization controller (PC4; PC8), respectively, and/or to said pump laser (LP1; LP2), respectively.

7. The circuit (A1; A2; B2) according to claim 6, **characterized in that** at least one said programmable managing element (PME1; PME2) has at least one measurement sensor incorporated in its structure and designed for monitoring at least one environmental parameter.

8. The circuit (A1; A2; B2) according to claim 1 or 6, **characterized in that** said attenuator (VOA1; VOA2) is optical or optoelectronic.

9. The circuit (A1; A2; B2) according to claim 1 or 6, **characterized in that** said pump laser (LP1; LP2) constitutes sets of lasers with adjusted spectral parameters.

10. The circuit (A1; A2; B2) according to claim 1 or 6, **characterized in that** said polarization controller (PC4; PC8) is a horizontal polarisation controller.

11. A polarization attractor circuit (B1) designed for an improved unidirectional data transmission over a telecommunications network, **characterized in that** it comprises polarization controllers (PC1, PC2) designed for changing the polarization state of signals, wherein said polarization controllers (PC1, PC2) are connected to at least one polarizing beam splitter (PBS1) designed to combine signals into a common output of the polarizing beam splitter (PBS1) in one data transmission direction.

12. The circuit (B1) according to claim 11, **characterized in that** polarisation controller (PC1) is a horizontal polarisation controller and polarisation controller (PC2) is a vertical polarisation controller.

13. A transmission system (100; 200) for an improved unidirectional or bidirectional data transmission over a telecommunication network in which end devices (EDA1_1, EDA1_2, ..., EDA1_N) or (EDB1_1, EDB1_2, ..., EDB1_N) and end devices (EDA2_1, EDA2_2, ..., EDA2_N) or (EDB2_1, EDB2_2, ..., EDB2_N) constitute part of the structure of transmission devices for data transmission using methods based on wave division multiplexing (WDM) and/or methods based on Time Division Multiplexing (TDM) or methods based on code division multiplexing (CDM), wherein end devices (EDA1_1, EDA1_2, ..., EDA1_N) or (EDB1_1, EDB1_2, ..., EDB1_N) are connected through a transmission medium (110; 210) with end devices (EDA2_1, EDA2_2, ..., EDA2_N) or (EDB2_1, EDB2_2, ..., EDB2_N), wherein the transmission medium (110; 210) is located in cable ducting, overhead or inside buildings, **characterized in that** between the end devices (EDA1_1, EDA1_2, ..., EDA1_N) or (EDB1_1, EDB1_2, ..., EDB1_N) and the transmission medium (110; 210), there is located a first at least one polarization attractor circuit (A1; B1) as defined in any of claims 1 to 10 for the polarization attractor circuit (A1) and as defined in any of claims 11 to 12 for the polarization attractor circuit (B1), and between the transmission medium (110, 210) and the end devices (EDA2_1, EDA2_2, ..., EDA2_N) or (EDB2_1, EDB2_2, ..., EDB2_N) there is located a second at least one polarization attractor circuit (A2; B2) as defined in any of claims 1 to 10 for the polarization attractor circuit (A2; B2).

14. The system according to claim 13, **characterized in that** the transmission medium (110; 210) is a transmission optical fibre.

15. The system according to claim 13 or 14, **characterized in that** a transmission optical fibre used as the transmission medium (110; 210) has the same nonlinearity level as the non-linear element (NLE1; NLE2).

16. A transmission method for an improved unidirectional or bidirectional data transmission over a telecommunication network consisting in that the end devices (EDA1_1, EDA1_2, ..., EDA1_N) or (EDB1_1, EDB1_2, ..., EDB1_N) and end devices (EDA2_1, EDA2_2, ..., EDA2_N) or (EDB2_1, EDB2_2, ..., EDB2_N) constitute part of the structure of transmission devices for data transmission using methods based on Wavelength Division Multiplexing (WDM) and/or methods based on Time Division Multiplexing (TDM) or methods based on Code Division Multiplexing (CDM), wherein the end devices (EDA1_1, EDA1_2, ..., EDA1_N) or (EDB1_1, EDB1_2, ..., EDB1_N) send signals having a predetermined wavelength via a transmission medium (110; 210) to the end devices (EDA2_1, EDA2_2, ..., EDA2_N) or (EDB2_1, EDB2_2, ..., EDB2_N), wherein the transmission medium (110; 210) is located in cable ducting, overhead or inside buildings, **characterized in that** signals having predetermined wavelengths are delivered from the end devices (EDA1_1, EDA1_2, ..., EDA1_N) or (EDB1_1, EDB1_2, ..., EDB1_N) to a first at least one polarization attractor circuit (A1; B1) as defined in any of claims 1 to 10 for the polarization attractor circuit (A1) or as defined in any of claims 11 to 12 for the polarization attractor circuit (B1), and then the signals are delivered via the transmission medium (110; 210) to the second at least one polarization attractor circuit (A2; B2) as defined in any of claims 1 to 10 for the polarization attractor circuit (A2; B2) and from there - to the end devices (EDA2_1, EDA2_2, ..., EDA2_N) or (EDB2_1, EDB2_2, ..., EDB2_N).

17. The method according to claim 16, **characterized in that** for the polarization attractor circuit (A1; B1), signals with predetermined wavelengths are delivered to the inputs of polarization controller (PC1) and (PC2), wherein the signals with predetermined wavelengths received in the polarization controller (PC1) and (PC2) are subjected to a change of polarization state by performing horizontal polarization in the polarization controller (PC1), and by performing vertical polarization in the polarization controller (PC2), to the above-mentioned signals with predetermined wavelengths are given orthogonal polarization states;
subsequently, the signals with predetermined wavelengths subjected to a change of polarization state are delivered from the outputs of polarization controllers (PC1) and (PC2) to separate inputs of at least one polarizing beam splitter (PBS1) in which said signals are combined in such a way that multiplied-polarization signals with predetermined wavelengths are obtained at the common output of at least one polarizing beam splitter (PBS1);
in the case of the polarization attractor circuit (A1), such multiplied-polarization signals with predetermined wavelengths are delivered to the input of the switching element (F1) which directs these signals to the input of the switching element (F2) by means of which the signals are placed in the transmission medium (110);
wherein in the case of the polarization attractor circuit (B1), such polarization-multiplied signals with predetermined wavelengths are placed immediately in the transmission medium (210);
these polarization-multiplied signals with predetermined wavelengths are sent by means of the transmission medium (110; 210) to the input of the switching element (F4) located in the second polarization attractor circuit (A2; B2);
subsequently, the signals are sent by means of said switching element (F4) to the input of the coupling element (S4) in which these multiplied signals with predetermined wavelengths are combined with the signal of a pump wave with a predetermined wavelength originating from a pump laser (LP2);
wherein said signal of a pump wave with a predetermined wavelength from the pump laser (LP2), before it reaches said coupling element (S4), is delivered from the pump laser (LP2) to the input of the polarizing beam splitter (PBS3);
subsequently, the signal of a pump wave with a predetermined wavelength from the pump laser (LP2) is sent from the output of the polarizing beam splitter (PBS3) to the input of polarization controller (PC8) in which said signal of a pump wave with a predetermined wavelength from the pump laser (LP2) is subjected to a change of polarization state into a horizontal polarization state of the signal of the pump wave with the predetermined wavelength;
subsequently, the signal of a pump wave with a predetermined wavelength from the pump laser (LP2) is delivered from the output of polarization controller (PC8) to the input of said coupling element (S4) in which the above-mentioned combining of signals takes place and the signals are delivered to the input of the non-linear element (NLE2);
wherein in the non-linear element (NLE2), interaction based on stimulated Raman scattering occurs between the signal of a pump wave with a predetermined wavelength from the pump laser (LP2), and by means of multiplied signals with predetermined wavelengths, result in a change of the polarization state, degree of polarization and signal strength;
subsequently, the multiplied signals with predetermined wavelengths and the signal of a pump wave with a predetermined wavelength from the pump laser (LP2) are delivered from the output of the non-linear element (NLE2) to the input of the splitting element (S3);
wherein the signal of a pump wave with a predetermined wavelength from the pump laser (LP2) is separated by means of splitting element (S3) from the multiplied signals with predetermined wavelengths by means of a band-pass filter;
then the multiplied signals with predetermined wavelengths are delivered to the input of the attenuator (VOA2) which adjusts the signal strength by attenuating to a specific predetermined level;
subsequently, the multiplied signals with predetermined wavelengths are delivered from the output of attenuator (VOA2) to the input of polarization controller (PC7) by means of which their polarization state changes and the above-mentioned signals are thus transformed into orthogonal polarization states by performing linear polarization with the inclination angle of 45° relative to the axis of operation of polarizing beam splitter (PBS4);
subsequently, the signals with predetermined wavelengths subjected to change of polarization state are delivered to the input of the switching element (F3) by means of which the signals are delivered to the common input of the polarization beam splitter (PBS4) in which the signals with predetermined wavelengths are split and delivered to the separate outlets of said polarization beam splitter (PBS4);
wherein separated signals with predetermined wavelengths are sent from said outputs of polarizing beam splitter (PBS4) to the input of polarization controller (PC5) and (PC6), and subsequently to respective outputs of the polarization attractor circuit (A2; B2) and from there - to the end devices (EDA2_1, EDA2_2, ..., EDA2_N) or (EDB2_1, EDB2_2, ..., EDB2_N),
whereas signals with predetermined wavelengths in the opposite data transmission direction are delivered from the end devices (EDA2_1, EDA2_2, ..., EDA2_N) to the input of polarization controllers (PC5) and (PC6) located in the polarization attractor circuit (A2), said signals with predetermined wavelengths being subjected to analogous operations during their way through the above-described connections in the opposite data transmission direction as those for the signals with predetermined wavelengths which are delivered from the end devices (EDA1_1, EDA1_2, ..., EDA1_N).

18. The method according to claim 17, **characterized in that** the polarization state of signals with predetermined wavelengths is changed manually or automatically by means of polarization controller (PC1, PC2; PC5, PC6).

19. The method according to claim 16 or 17 or 18, **characterized in that** signals with predetermined wavelength fall within the range of 1500 nm to 1570 nm in one data transmission direction and within the range of 1470 nm to 1500 nm in the opposite data transmission direction.

20. The method according to claim 17, **characterized in that** a signal with predetermined wavelength from a pump laser (LP1; LP2) falls within the range of 1400 to 1460 nm.

21. The method according to claim 17, **characterized in that** said attenuator (VOA1; VOA2) and/or said polarization controller (PC4, PC8) and/or said pump laser (LP1; LP2) are electronically or mechanically controlled by means of at least one programmable managing element (PME1; PME2).

22. The method according to claim 21, **characterized in that** at least one programmable managing element (PME1; PME2) additionally monitors at least one environmental parameter by means of at least one measurement sensor incorporated in its structure.

23. The method according to claim 22, **characterized in that** mechanical tension of the polarization attractor circuit (A1; A2; B2) structure and/or atmospheric pressure and/or temperature level and/or humidity level and/or levelling of the polarization attractor circuit (A1; A2; B2) are monitored by means of at least one measurement sensor.

24. A computer program by means of which it is possible to remotely control and monitor the operation of the polarization attractor circuits (A1; A2; B2) in accordance with the proposed method, wherein all steps of the method may be performed according to one of the above claims when the computer program is executed in at least one programmable managing element (PME1; PME2) and/or in a remotely localized computer and/or server platform.

25. A computer program product with a computer-readable medium and a computer program saved on a computer-readable medium and a program code, which enables performing the steps of the method according to one of the above claims when the computer program is executed in at least one programmable managing element (PME1; PME2) and/or in a remotely localized computer and/or sever platform.
